# FASCICULE DE BREVET EUROPEEN

(11) **EP 0 771 685 B1**
(45) Date de publication et mention de la délivrance du brevet: **07.06.2000**
(21) Numéro de dépôt: 96202981.5
(22) Date de dépôt: 25.10.1996
(51) Int. Cl.: B60K 15/04

(54) **Embout de remplissage d'un réservoir à carburant**
Einfüllstutzen für einen Kraftstofftank
Fuel tank filler neck

(30) Priorité: 06.11.1995 BE 9500913
(43) Date de publication de la demande: 07.05.1997
(73) Titulaire: SOLVAY (Société Anonyme), 1050 Bruxelles (BE)
(72) Inventeur: Ganachaud, Patrick, 53000 Laval (FR); Turpin, Jacques, 53360 Quelaine (FR); Maignan, Eddy, 53000 Laval (FR); Rolinat, Jean-Philippe, 53000 Laval (FR)
(74) Mandataire: Decamps, Alain René François

(56) Documents cités:
- EP-A- 0 223 931
- EP-A- 0 357 874
- EP-A- 0 621 153
- EP-A- 0 645 273
- EP-A- 0 659 603
- FR-A- 2 633 224

## Description

L'invention concerne un embout de remplissage d'un réservoir à carburant, notamment pour un véhicule automobile comme indiqué dans le préambule de la revendication 1. Un tel embout de remplissage est connu par le document EP 0659 603 A1.

Les réservoirs à carburant, en particulier lorsqu'ils sont réalisés à partir de matière thermoplastique, ont actuellement des formes et des positions de fixation de plus en plus spécifiquement adaptées à leur destination, spécialement lorsqu'ils sont destinés aux véhicules automobiles.

Le volume laissé à la tubulure de remplissage dans l'environnement du véhicule est corrélativement de plus en plus restreint et impose des parcours a priori peu favorables à l'écoulement du carburant. Ce faisant, ces parcours peuvent au contraire favoriser les rejets de carburant vers l'utilisateur en cours de remplissage et les déclenchements intempestifs du dispositif propre au pistolet et destiné à éviter le suremplissage.

Par ailleurs, l'application de normes environnementales de plus en plus strictes impose d'assurer au mieux la canalisation des gaz qui doivent être évacués du réservoir au cours de son remplissage, en vue de leur traitement ou même éventuellement de leur récupération.

Le document EP 0621153 A1 décrit un embout de remplissage d'un réservoir à carburant, en particulier à essence sans plomb, comportant un corps tubulaire de forme tronconique présentant à son extrémité aval un volet mobile et se prolongeant par une gouttière semi-cylindrique éventuellement terminée par une butée transversale.

Un tel dispositif permet le guidage longitudinal d'un pistolet pour essence sans plomb dans la tubulure de remplissage du réservoir. Néanmoins, il ne permet pas de garantir de manière complète et sûre le positionnement latéral et le maintien du pistolet lors du remplissage. A cet effet, il requiert l'association d'autres moyens, par exemple l'utilisation simultanée sur l'embout de remplissage ou sur l'orifice même de la tubulure de remplissage d'éléments supplémentaires (ergots, bagues, ...), qui ajoutent à la complexité du dispositif et à l'incertitude de son fonctionnement optimum.

En outre, ce dispositif ne permet pas de protéger le pistolet sur toute sa périphérie des goutelettes de carburant qui peuvent y être projetées et entraîner le déclenchement intempestif du dispositif propre au pistolet et destiné à éviter le suremplissage.

L'invention a dès lors pour objet un embout de remplissage d'un réservoir à carburant qui permette de manière simple, complète et sûre le positionnement et le maintien du pistolet à carburant lors du remplissage du réservoir, en réduisant en particulier au maximum les risques de rejets de carburant vers l'utilisateur et de déclenchements intempestifs du dispositif propre au pistolet et destiné à éviter le suremplissage.

L'invention concerne à cet effet un embout de remplissage d'un réservoir à carburant comportant un corps tubulaire ayant une première extrémité ouverte communiquant en amont avec l'orifice de remplissage et une seconde extrémité ouverte communiquant en aval avec la tubulure de remplissage, qui se caractérise en ce que le corps tubulaire comprend vers l'aval une portion finale intérieurement tronconique de section dégressive de l'amont vers l'aval, dont l'angle d'ouverture de cône ne dépasse pas 10 ° et dont le plus petit diamètre intérieur est égal ou légèrement supérieur au diamètre extérieur du bec du pistolet de remplissage.

L'embout de remplissage est destiné à être fixé sur la tubulure de remplissage du réservoir, à son orifice de remplissage ou près de cet orifice.

L'embout est associé au remplissage d'un réservoir à carburant. En particulier, l'embout est associé au remplissage d'un réservoir à carburant d'un véhicule, plus particulièrement encore d'un véhicule automobile.

Le plus souvent, l'embout de remplissage comprend également vers l'amont une zone d'entrée de section dégressive de l'amont vers l'aval, dont le plus grand diamètre intérieur est très sensiblement supérieur au diamètre extérieur du bec d'un pistolet de remplissage devant y être introduit et dont le plus petit diamètre intérieur reste supérieur au diamètre extérieur dudit bec. Cette zone d'entrée permet l'introduction du pistolet par l'utilisateur, sans attention excessive, et l'orientation aisée du pistolet en vue de son positionnement. Les dimensions de cette zone d'entrée permettent déjà d'éviter l'introduction plus avant de certains pistolets non conformes et qui délivreraient un carburant non adapté notamment au moteur devant être alimenté. En particulier, cette zone d'entrée permet déjà éventuellement d'empêcher l'introduction plus avant dans l'embout de remplissage de tout autre pistolet qu'un pistolet délivrant de l'essence sans plomb. La forme de cette zone d'entrée n'est pas plus précisément imposée. En particulier, elle peut être d'allure conique.

L'angle d'ouverture de cône de la portion finale intérieurement tronconique ne dépasse pas 10°. De préférence, il ne dépasse pas 5°. Plus préférentiellement encore, il ne dépasse pas 3°.

La portion finale intérieurement tronconique a une longueur suffisante pour permettre le positionnement précis et le maintien complet et sûr du pistolet de remplissage uniquement a partir de la dernière partie de son bec. En particulier, la portion finale intérieurement tronconique a une longueur d'au moins 10 mm. Plus particulièrement, elle a une longueur d'au moins 20 mm. D'excellents résultats ont été obtenus avec une longueur d'au moins 30 mm.

Par ses dimensions et par le faible angle d'ouverture de cône, la portion finale intérieurement tronconique permet le positionnement précis et le maintien complet et sûr du pistolet de remplissage uniquement à partir de la dernière partie de son bec, indépendamment de sa courbure et sans qu'il soit besoin d'associer à cet effet d'autres éléments du pistolet ou de l'embout tels que des ergots ou des bagues. L'absence de recours à de tels éléments, outre la simplification qu'elle permet, évite en outre l'usure et les dommages éventuels, en particulier à l'embout de remplissage.

Par la portion finale intérieurement tronconique entourant entièrement le pistolet lors du remplissage, l'embout de remplissage protège le pistolet sur toute sa périphérie contre les projections éventuelles de carburant et évite les déclenchements intempestifs pour cette raison du dispositif propre au pistolet et destiné à éviter le suremplissage.

De manière avantageuse, le corps tubulaire comprend une portion intercalaire intérieurement tronconique de section dégressive de l'amont vers l'aval, dont l'axe correspond substantiellement à l'axe de la portion finale intérieurement tronconique et dont le plus petit diamètre intérieur est supérieur au diamètre extérieur du bec du pistolet de remplissage.

Par intercalaire, on entend ici définir que la portion concernée soit située dans le corps tubulaire en amont de la portion finale intérieurement tronconique et, le cas échéant, en aval de la zone d'entrée.

L'angle d'ouverture de cône de la portion intercalaire intérieurement tronconique doit être adapté à l'embout et au pistolet de remplissage. En particulier, cet angle ne dépasse pas 18°. Plus particulièrement encore, il ne dépasse pas 5°.

Vu la section dégressive de l'amont vers l'aval de la portion intercalaire et de la portion finale, le diamètre moyen de la portion intercalaire est supérieur au diamètre moyen de la portion finale. Dès lors, la réalisation de la portion intercalaire, par exemple par moulage d'une matière thermoplastique, étant plus aisée et le risque de coincement du pistolet de remplissage y étant inférieur, l'angle d'ouverture de cône de la portion intercalaire peut même être inférieur à l'angle d'ouverture de cône de la portion finale.

Les deux portions intérieurement tronconiques peuvent être adjacentes ou non. De manière avantageuse, elles sont adjacentes.

Avantageusement, le corps tubulaire comprend à son extrémité aval une butée. Cette butée peut être longitudinale ou transversale. Elle empêche l'introduction plus avant du pistolet dans l'embout de remplissage et contribue ainsi à son positionnement longitudinal optimal.

Dans un mode de réalisation avantageux, la portion finale intérieurement tronconique est pourvue, sur au moins une partie de sa longueur et sur au moins une partie de sa périphérie, d'une série de nervures longitudinales espacées circulairement dont les extrémités définissent, au moins en partie, le diamètre intérieur de ladite portion. Le nombre de nervures peut évidemment être adapté au cas par cas. Leur espacement circulaire peut être régulier ou non. Elle peuvent porter sur tout ou partie de la longueur de la portion concernée. Avantageusement, elles portent au moins sur la partie aval de la portion concernée. De préférence, elles portent sur toute la longueur de la portion concernée.

Les extrémités des nervures définissent ainsi au moins en partie la surface d'appui de la dernière partie du bec du pistolet de remplissage, réduisant notamment le frottement du bec sur la surface d'appui. De plus, en limitant la surface de contact entre le bec et son appui, on réduit les risques de formation éventuelle d'un film de carburant qui pourrait d'une part remonter vers l'utilisateur et d'autre part entraîner le déclenchement intempestif du dispositif propre au pistolet et destiné à éviter le suremplissage.

Le corps tubulaire comprend en particulier un flasque extérieur destiné à coopérer avec une partie de la surface intérieure de la tubulure de remplissage pour d'une part empêcher lors du remplissage la remontée de carburant et l'évacuation substantielle des gaz par la tubulure vers l'orifice de remplissage et pour d'autre part définir un espace dans la partie supérieure de la tubulure sans interaction avec le flux entrant de carburant.

Ainsi, en empêchant lors du remplissage la remontée de carburant par la tubulure de remplissage vers l'orifice de remplissage, on empêche les rejets de carburant vers l'utilisateur.

De même, en empêchant lors du remplissage l'évacuation substantielle des gaz par la tubulure de remplissage vers l'orifice de remplissage, on évite les turbulences chargées de goutelettes de carburant au niveau de l'extrémité du bec du pistolet de remplissage et qui peuvent entraîner le déclenchement intempestif du dispositif propre au pistolet et destiné à éviter le suremplissage.

Par gaz, on entend ici désigner essentiellement l'air et la vapeur de carburant contenus dans le réservoir lors de son remplissage.

Avantageusement, les gaz sortant du réservoir lors de son remplissage sont évacués au travers de l'espace défini dans la partie supérieure de la tubulure de remplissage.

De préférence, les gaz évacués du réservoir lors de son remplissage sont amenés dans l'espace défini dans la partie supérieure de la tubulure de remplissage par un circuit différent, au moins dans sa partie supérieure, de la tubulure de remplissage. Plus préférentiellement encore, ce circuit est entièrement différent de la tubulure de remplissage.

Ainsi encore, lors du remplissage, on évite l'entraînement de goutelettes de carburant qui pourraient être rejetées vers l'utilisateur.

Les gaz amenés dans l'espace défini dans la partie supérieure de la tubulure de remplissage peuvent à ce niveau être idéalement canalisés vers l'orifice de remplissage d'où ils peuvent être rejetés à l'extérieur ou réaspirés en vue d'éviter leur rejet dans l'environnement. A cet effet encore, l'absence substantielle de goutelettes de carburant entraînées avec les gaz constitue un avantage sensible.

L'embout de remplissage peut être utilisé en association avec des réservoirs à divers carburants. En particulier, il peut être utilisé en association avec des réservoirs à essence, avec ou sans plomb, ou à gasoil.

Dans le cas d'un réservoir à essence sans plomb, il est bien connu que l'embout de remplissage comporte une zone d'entrée suivie d'un clapet mobile normalement maintenu par des moyens élastiques en position fermée et s'ouvrant lors de l'introduction d'un pistolet de remplissage de dimensions adaptées.

Ainsi qu'il a été mentionné plus haut, l'éventuelle zone d'entrée du corps tubulaire permet déjà d'empêcher l'introduction plus avant d'un pistolet de remplissage de dimensions non adaptées.

Un clapet mobile peut donc être positionné dans l'embout de remplissage, en aval de ladite zone d'entrée. De préférence, il est positionné dans la portion finale intérieurement tronconique. Plus préférentiellement encore, il est positionné à l'entrée de cette portion finale intérieurement tronconique.

L'embout de remplissage comprend avantageusement, dans la portion finale intérieurement tronconique du corps tubulaire, un clapet mobile autour d'un axe sensiblement perpendiculaire à l'axe de la portion finale intérieurement tronconique, ledit clapet étant normalement rappelé par des moyens élastiques en position fermée et s'ouvrant lors de l'introduction du pistolet de remplissage du réservoir en se logeant dans une cavité de forme adaptée prévue à cet effet dans la partie finale intérieurement tronconique.

De manière préférée, le clapet est d'une forme telle et/ou comporte au moins un patin tel que, lorsque ce clapet est ouvert et logé dans la cavité de forme adaptée prévue à cet effet, ledit clapet et/ou ledit patin assurent au moins en partie la continuité de forme avec la portion intérieurement tronconique adjacente.

Ainsi, les fonctions de positionnement et de maintien du pistolet lors du remplissage sont pleinement assurées par la coopération du clapet et/ou du patin.

Le corps tubulaire peut être réalisé en tout matériau connu à cet effet. En particulier, il est réalisé en matière plastique, plus particulièrement encore en matière thermoplastique.

Le corps tubulaire est avantageusement réalisé en une seule pièce.

De manière particulièrement avantageuse, le corps tubulaire est réalisé en une seule pièce en matière plastique.

Dans un mode de réalisation spécifique, l'embout de remplissage est réalisé en une seule pièce.

L'invention est illustrée de manière non limitative par les figures suivantes:
- la figure 1 représente une vue en coupe transversale d'un embout de remplissage selon l'invention;
- la figure 2 représente une coupe selon AA de la figure 1.

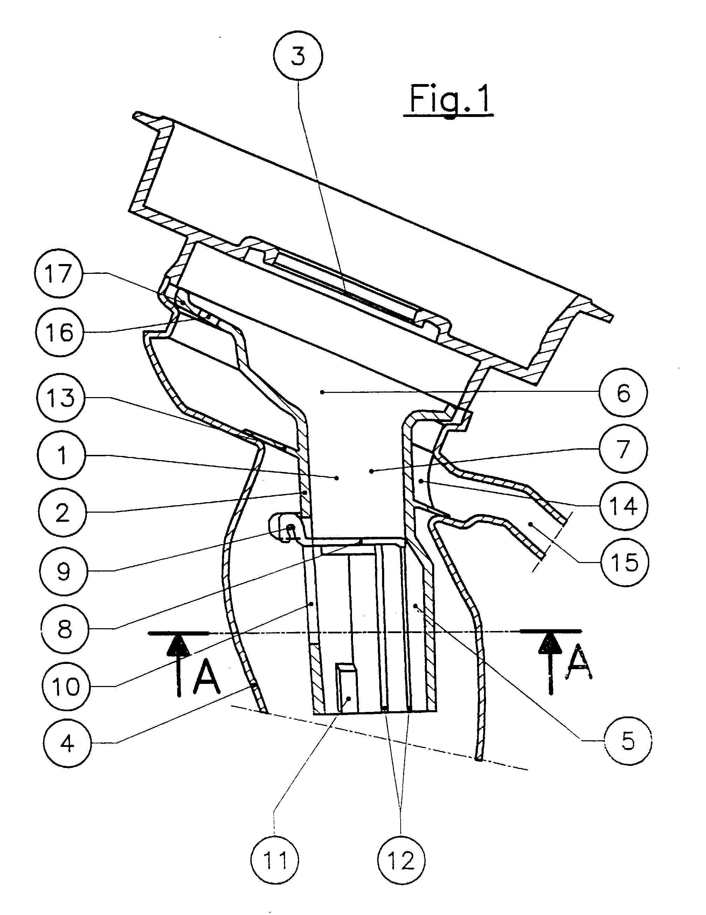

L'embout de remplissage 1 selon la figure 1 comporte un corps tubulaire 2 ayant une première extrémité ouverte communiquant en amont avec l'orifice de remplissage 3 du réservoir et une seconde extrémité ouverte communiquant en aval avec la tubulure de remplissage 4 du réservoir, le corps tubulaire comprenant vers l'aval une portion finale intérieurement tronconique 5 de section dégressive de l'amont vers l'aval, dont l'angle d'ouverture de cône est de 3° et dont le plus petit diamètre intérieur est légèrement supérieur au diamètre extérieur du bec du pistolet de remplissage.

L'embout de remplissage 1 comprend également vers l'amont une zone d'entrée 6 de section dégressive de l'amont vers l'aval, dont le plus grand diamètre intérieur est très sensiblement supérieur au diamètre extérieur du bec d'un pistolet de remplissage devant y être introduit et dont le plus petit diamètre intérieur reste supérieur au diamètre extérieur dudit bec.

Le corps tubulaire comprend également une portion intercalaire intérieurement tronconique 7 de section dégressive de l'amont vers l'aval, dont l'axe correspond à l'axe de la portion finale intérieurement tronconique 5, dont l'angle d'ouverture de cône est de 1,3°, dont le plus petit diamètre intérieur est supérieur au diamètre extérieur du bec d'un pistolet de remplissage devant y être introduit.

La portion intercalaire 7 est adjacente à la portion finale 5.

L'embout de remplissage représenté étant destiné à un réservoir à essence sans plomb, le corps tubulaire comprend un clapet 8 mobile autour d'un axe 9 sensiblement perpendiculaire à l'axe de la portion finale intérieurement tronconique du corps tubulaire, ledit clapet étant rappelé par des moyens élastiques en position fermée et pouvant s'ouvrir lors de l'introduction du pistolet de remplissage du réservoir en se logeant dans une cavité 10 de forme adaptée prévue à cet effet dans la partie finale intérieurement tronconique du corps tubulaire.

Le corps tubulaire 2 comprend en outre à son extrémité aval une butée longitudinale 11.

Il est également pourvu, sur toute la longueur de la portion finale intérieurement tronconique, de nervures longitudinales 12 espacées circulairement de manière régulière sur une partie de sa périphérie.

Le corps tubulaire comprend en outre un flasque extérieur 13 destiné à coopérer avec une partie de la surface intérieure de la tubulure de remplissage pour d'une part empêcher lors du remplissage la remontée de carburant et l'évacuation substantielle des gaz par la tubulure de remplissage vers l'orifice de remplissage et pour d'autre part définir un espace 14 dans la partie supérieure de la tubulure sans interaction avec le flux entrant de carburant.

Lors du remplissage, les gaz évacués du réservoir sont amenés dans l'espace 14 par un circuit de dégazage 15 entièrement différent de la tubulure de remplissage. De cet espace 14, ils sont canalisés vers l'orifice de remplissage au travers des ouvertures 16 prévues à cet effet dans la partie 17 destinée à permettre la fixation de l'embout de remplissage sur la tubulure de remplissage.

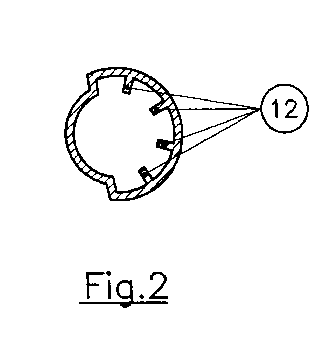

La figure 2 représente une coupe de l'embout de remplissage selon AA, dans la portion finale intérieurement tronconique du corps tubulaire. Elle illustre particulièrement les nervures 12 espacées circulairement de manière régulière sur une partie de sa périphérie.

## Revendications

1. Embout de remplissage (1) d'un réservoir à carburant comportant un corps tubulaire(2) ayant une première extrémité ouverte communiquant en amont avec l'orifice de remplissage(3) et une seconde extrémité ouverte communiquant en aval avec la tubulure de remplissage(4), caractérisé en ce que le corps tubulaire comprend vers l'aval une portion finale intérieurement tronconique(5) de section dégressive de l'amont vers l'aval, dont l'angle d'ouverture de cône ne dépasse pas 10 ° et dont le plus petit diamètre intérieur est égal ou légèrement supérieur au diamètre extérieur du bec du pistolet de remplissage.

2. Embout de remplissage(1) selon la revendication 1, caractérisé en outre en ce que la portion finale intérieurement tronconique a une longueur d'au moins 10 mm.

3. Embout de remplissage (1) selon l'une quelconque des revendications précédentes, caractérisé en outre en ce que le corps tubulaire comprend une portion intercalaire intérieurement tronconique(7) de section dégressive de l'amont vers l'aval, dont l'axe correspond substantiellement à l'axe de la portion finale intérieurement tronconique(5) et dont le plus petit diamètre intérieur est supérieur au diamètre extérieur du bec du pistolet de remplissage.

4. Embout de remplissage (1) selon l'une quelconque des revendications précédentes, caractérisé en outre en ce qu'il comprend à l'extrémité aval du corps tubulaire(2) une butée (11).

5. Embout de remplissage (1) selon l'une quelconque des revendications précédentes, caractérisé en outre en ce que la portion finale intérieurement tronconique (5) est pourvue sur au moins une partie de sa longueur et sur au moins une partie de sa périphérie d'une série de nervures longitudinales (12) espacées circulairement dont les extrémités définissent au moins en partie le diamètre intérieur de ladite portion.

6. Embout de remplissage (1) selon l'une quelconque des revendications précédentes, caractérisé en outre en ce que le corps tubulaire comprend un flasque extérieur(13) destiné à coopérer avec une partie de la surface intérieure de la tubulure de remplissage pour d'une part empêcher lors du remplissage la remontée de carburant et l'évacuation substantielle des gaz par la tubulure vers l'orifice de remplissage et pour d'autre part définir un espace (14) dans la partie supérieure de la tubulure sans interaction avec le flux entrant de carburant.

7. Embout de remplissage(1) selon l'une quelconque des revendications précédentes, caractérisé en outre en ce qu'il comprend, dans la portion finale intérieurement tronconique(5) du corps tubulaire(2), un clapet(8) mobile autour d'un axe(9) sensiblement perpendiculaire à l'axe de la portion finale intérieurement tronconique, ledit clapet étant normalement rappelé par des moyens élastiques en position fermée et s'ouvrant lors de l'introduction du pistolet de remplissage du réservoir en se logeant dans une cavité (10) de forme adaptée prévue à cet effet dans la partie finale intérieurement tronconique.

8. Embout de remplissage (1) selon la revendication précédente, caractérisé en outre en ce que le clapet(8) est d'une forme telle et/ou comporte au moins un patin tel que, lorsque ce clapet est ouvert et logé dans la cavité (10) de forme adaptée prévue à cet effet, ledit clapet et/ou ledit patin assurent au moins en partie la continuité de forme avec la portion intérieurement tronconique adjacente.

9. Embout de remplissage (1) selon l'une quelconque des revendications précédentes, caractérisé en outre en ce que le corps tubulaire(2) est réalisé en une seule pièce en matière plastique.

## Patentansprüche

1. Einfüllstutzen (1) für einen Kraftstofftank, der einen röhrenförmigen Körper (2) mit einem ersten, stromaufwärts mit der Einfüllöffnung (3) verbundenen offenen Ende und einem zweiten, stromabwärts mit dem Einfüllrohr (4) verbundenen offenen Ende aufweist, dadurch gekennzeichnet, dass der röhrenförmige Körper nach stromabwärts hin einen im Inneren kegelstumpfförmigen Endteil (5) mit einem von stromaufwärts nach stromabwärts hin abnehmenden Querschnitt umfasst, dessen Kegelöffnungswinkel 10° nicht übersteigt und dessen kleinster Innendurchmesser gleich dem oder geringfügig größer als der Außendurchmesser des Mundstücks der Zapfpistole ist.

2. Einfüllstutzen (1) nach Anspruch 1, außerdem dadurch gekennzeichnet, dass der im Inneren kegelstumpfförmige Endteil eine Länge von mindestens 10 mm aufweist.

3. Einfüllstutzen (1) nach einem der vorangehenden Ansprüche, außerdem dadurch gekennzeichnet, dass der röhrenförmige Körper einen im Inneren kegelstumpfförmigen Zwischenteil (7) mit einem von stromaufwärts nach stromabwärts hin abnehmenden Querschnitt aufweist, dessen Achse im Wesentlichen der Achse des im Inneren kegelstumpfförmigen Endteils (5) entspricht und dessen kleinster Innendurchmesser größer als der Außendurchmesser des Mundstücks der Zapfpistole ist.

4. Einfüllstutzen (1) nach einem der vorangehenden Ansprüche, außerdem dadurch gekennzeichnet, dass er am stromabwärtigen Ende des röhrenförmigen Körpers (2) einen Anschlag (11) umfasst.

5. Einfüllstutzen (1) nach einem der vorangehenden Ansprüche, außerdem dadurch gekennzeichnet, dass der im Inneren kegelstumpfförmige Endteil (5) auf mindestens einem Teil seiner Länge und auf mindestens einem Teil seines Umfangs mit einer Reihe von im Kreis im Abstand angeordneten Längsrippen (12) versehen ist, deren Enden mindestens zum Teil den Innendurchmesser des besagten Teils begrenzen.

6. Einfüllstutzen (1) nach einem der vorangehenden Ansprüche, außerdem dadurch gekennzeichnet, dass der röhrenförmige Körper einen äußeren Flansch (13) umfasst, der zum Zusammenwirken mit einem Teil der inneren Oberfläche des Einfüllrohrs bestimmt ist, um einerseits bei der Befüllung das Aufsteigen von Kraftstoff und die wesentliche Abfuhr von Gasen durch das Rohr zur Einfüllöffnung hin zu verhindern, und um andererseits im oberen Teil des Rohrs einen Raum (14) ohne Wechselwirkung mit dem eintretenden Kraftstofffluss zu begrenzen.

7. Einfüllstutzen (1) nach einem der vorangehenden Ansprüche, außerdem dadurch gekennzeichnet, dass er in dem im Inneren kegelstumpfförmigen Endteil (5) des röhrenförmigen Körpers (2) eine Klappe (8) umfasst, die um eine zur Achse des im Inneren kegelstumpfförmigen Endteils im Wesentlichen senkrechte Achse (9) beweglich ist, wobei die besagte Klappe normalerweise durch elastische Mittel in eine geschlossene Position zurückgestellt wird und sich beim Einführen der Zapfpistole des Tanks öffnet, indem sie sich in einen Hohlraum (10) von angepasster Form verlagert, der zu diesem Zweck in dem im Inneren kegelstumpfförmigen Endteil vorgesehen ist.

8. Einfüllstutzen (1) nach dem vorangehenden Anspruch, außerdem dadurch gekennzeichnet, dass die Klappe (8) von einer solchen Form ist und/oder mindestens eine Auflage aufweist, so dass, wenn diese Klappe offen und in den zu diesem Zweck vorgesehenen Hohlraum (10) von angepasster Form verlagert ist, die besagte Klappe und/oder die besagte Auflage mindestens teilweise den stetigen Formverlauf mit dem angrenzenden, im Inneren kegelstumpfförmigen Teil sicherstellen.

9. Einfüllstutzen (1) nach einem der vorangehenden Ansprüche, außerdem dadurch gekennzeichnet, dass der röhrenförmige Körper (2) einstückig aus Kunststoff hergestellt ist.

## Claims

1. Filling adaptor (1) for a fuel tank, including a tubular body (2) having a first open end communicating upstream with the filling orifice (3) and a second open end communicating downstream with the filler pipe (4), characterized in that, downstream, the tubular body comprises an internally frustoconical final portion (5) whose cross-section decreases in the downstream direction, the cone vertex angle of which is no greater than 10° and the smallest internal diameter of which is equal to or slightly greater than the external diameter of the spout of the filler nozzle.

2. Filling adaptor (1) according to Claim 1, characterized furthermore in that the internally frustoconical final portion has a length of at least 10 mm.

3. Filling adaptor (1) according to either of the preceding claims, characterized furthermore in that the tubular body comprises an internally frustoconical intermediate portion (7) whose cross-section decreases in the downstream direction, the axis of which corresponds substantially to the axis of the internally frustoconical final portion (5) and the smallest internal diameter of which is greater than the external diameter of the spout of the filler nozzle.

4. Filling adaptor (1) according to any one of the preceding claims, characterized furthermore in that it comprises a stop (11) at the downstream end of the tubular body (2).

5. Filling adaptor (1) according to any one of the preceding claims, characterized furthermore in that the internally frustoconical final portion (5) is provided, over at least a part of its length and over at least a part of its periphery, with a series of circularly spaced longitudinal ribs (12) whose ends at least partly define the internal diameter of the said portion.

6. Filling adaptor (1) according to any one of the preceding claims, characterized furthermore in that the tubular body comprises an outer flange (13) intended to interact with a part of the inner surface of the filler pipe so as, on the one hand, to prevent, during filling, fuel from rising up and substantially any gas from being discharged through the pipe to the filling orifice and, on the other hand, to define a space (14) in the upper part of the pipe without interaction with the entering flow of fuel.

7. Filling adaptor (1) according to any one of the preceding claims, characterized furthermore in that it comprises, in the internally frustoconical final portion (5) of the tubular body (2), a flap valve (8) which can move about a spindle (9) substantially perpendicular to the axis of the internally frustoconical final portion, the said flap valve being normally returned by elastic means into the closed position and being opened when the nozzle for filling the tank is inserted, while being accommodated in a suitably shaped cavity (10) provided for this purpose in the internally frustoconical final part.

8. Filling adaptor (1) according to the preceding claim, characterized furthermore in that the flap valve (8) is of a shape such that and/or includes at least one pad such that, when this flap valve is open and accommodated in the suitably shaped cavity (10) intended for this purpose, the said flap valve and/or the said pad at least partly ensure continuity of shape with the adjacent internally frustoconical portion.

9. Filling adaptor (1) according to any one of the preceding claims, characterized furthermore in that the tubular body (2) is made integrally of plastic.
